# EUROPEAN PATENT APPLICATION

(11) **EP 1 580 227 A1**
(43) Date of publication of application: **28.09.2005**
(21) Application number: 04075835.1
(22) Date of filing: 15.03.2004
(51) Int. Cl.: C08K 9/04, C08L 23/02

(54) **Polymer additive composition for a host polymer and methods for making such composition**

(71) Applicant: NEDERLANDSE ORGANISATIE VOOR TOEGEPAST-NATUURWETENSCHAPPELIJK ONDERZOEK TNO, 2628 VK Delft (NL)
(72) Inventor: Boersma, Arjen, 5237 KL 's Hertogenbosch (NL); Rendering, Hendrik, 3437 XH Nieuwegein (NL)
(74) Representative: Winckels, Johannes Hubertus F.

(57) **Abstract**

The invention provides a polymer additive composition in the form of particles comprising an additive for protecting a host polymer against degradation which additive is encapsulated in a release controlling matrix which matrix is formed of a synthetic polymer having a glass transition temperature (T_{g} value) higher than 25°C. The invention further provides a suspension polymerisation process and a solvent evaporation process for preparing the polymer additive composition, as well as polymer compositions and products comprising the polymer additive composition.

## Description

The invention relates to polymer additive compositions in the form of particles for protection host polymers against degradation, methods for preparing the polymer additive compositions, polymer compositions comprising such polymer additive compositions, and products containing such polymer compositions. Specifically, this invention relates to the field of controlled release of polymer additives for enhanced protection of host polymers against external influences. The invention especially relates to the prevention of the deterioration of host polymers, e.g. due to oxidation of host polymers.

It is appreciated that the long-term performance of polymer products largely depend on the presence or absence of additives in the polymer matrix. Examples of these additives are antioxidants, UV stabilisers, hindered amine light stabilisers, antiozonants, etc, for the long-term protection against oxidative degradation; antistatic, antifogging, antisqueek agents, slip additives, etc, for the long-term surface properties of the polymer; antimicrobial agents for the long-term biological protection of the polymer; and corrosion inhibitors for corrosion protection in coatings, etc. The major danger for the long-term performance of such additives is their premature loss to the environment, without having been effective in the polymer matrix or surface. This means that the effectiveness of these additives can be enhanced by a longer residence time in the polymer.

Encapsulation of active or volatile compounds is as such a well-known method of preventing these compounds to be lost to the environment in an uncontrolled and fast manner. Choosing the material and morphology of the encapsulation medium makes it possible to regulate the release rate of the encapsulated compound. This so-called controlled release has been used already for medicines, herbicides, fertiliser, etc, where the capsules are usually used as separate particles.

The incorporation of encapsulated polymer additives in a host polymer to enhance its long-term performance is a relatively new approach. The additives are usually needed near the surface of a host polymer, because of the external influences, such as electric charging, UV light and oxygen causing oxidation. In practice this means that a constant and controlled (slow) flow of additives towards the surface is necessary over a long period of time. Encapsulation of additives can therefore be applied to ensure a controlled slow release of the additives. In addition it may prevent that such additives quickly evaporate and/or leach out.

It is further appreciated that most products manufactured from polymers are susceptible to oxidative degradation. This degradation may occur during processing due to heat and mechanical exposure or because of the presence of UV light and/or oxygen. The most common method of stabilising the polymer compositions against oxidation is the use of stabilisers. However, in order to protect a polymer composition these stabilisers need to be present in the polymer composition. It is known that most of the stabiliser can be lost to the environment due to evaporation or leaching out, especially in thin polymer products, like films, fibres and coatings. Encapsulation of the additive can therefore reduce this evaporation and leaching out.

It is further observed that a stabiliser or antioxidant keeps its activity as long as the concentration is above a certain critical level. Below this level, the oxidation of the polymer sets in, comparable to non-stabilised polymers. The service life of a polymer product is thus determined by the rate of stabiliser loss. Therefore, encapsulation can ensure a higher lifetime using the same amount of antioxidant or it can reduce the amount of stabiliser needed for the stabilisation for a particular time. Additionally, it can also result in the application of smaller and cheaper stabilisers.

Various kinds of stabilisers, such as antioxidants (phenolic and amine), metal desactivators, quenchers, processing stabilisers, hydroperoxide decomposers(phosphites, phosphonites etc.), UV absorbers, hindered amine stabilisers, etc., can be encapsulated for this purpose.

An example to tackle the problem of undesired mobility of relative small anti-degradation additive molecules within a host polymer is given in GB2237574, where small additive molecules are enclosed within a release controlling matrix capsule or shell of a cross-linked alginate, serving as a sort of additive release "sponge". These particles are rather hydrophylic and because of the sponge-like character of the matrix, the release characteristics leave considerable room for improvement.

One aim of the present invention is to provide an additive release system which protects polymer compositions in an improved manner.

Surprisingly, it has now been found that this can be established when the additive is encapsulated in a particular polymeric and hydrophobic type of material.

Accordingly, the present invention relates to a polymer additive composition in the form of particles comprising an additive for protecting a host polymer against degradation which additive is encapsulated in a release controlling matrix which matrix is formed of a synthetic polymer having a glass transition temperature (Tg value) higher than 25°C.

It has been found that the use of this particular type of polymers allows the additive to be released to the host polymer in a very slow and controlled manner, establishing a most effective use of the additive and resulting in a improved long-term performance of the polymer product.

Suitably, the synthetic polymer has a glass transition temperature in the range of from 40 to 230°C. The synthetic polymer can therefore suitably be chosen from the group consisting of acrylate polymers, methacrylate polymers, styrenic polymers, polycarbonates, polyesters, polysulfones, polyamides, polyimides, polyketons polyurethanes, and/or polyureas.

Preferably, the synthetic polymer has a glass transition temperature in the range of from 40 to 150°C, and more preferably in the range of from 80 to 150°C. Most preferably, the synthetic polymer comprises poly-methyl methacrylate (PMMA) and/or poly-methyl acrylate (PMA).

In accordance with the present invention one single type of synthetic polymer or a mixture of two or more different types of synthetic polymers can be used. In practice, usually only one type of synthetic polymer will be used.

The polymer additive composition according to the present invention is in the form of particles, usually capsules. The size of the particles is suitably in the range of from 1 to 100 µm, preferably in the range of from 5 to 50 µm, and more preferably in the range of from 10 to 30 µm.

As indicated hereinabove, for the encapsulation process to be effective the release of the additive from the capsules must be very slow. This can be achieved by using the synthetic polymer in accordance with the present invention. The capsules can be of the balloon type (i.e. the polymer additive core is enveloped by the capsule shell) or of the solid sphere type (i.e. the polymer additive is homogeneously dispersed in the capsule (matrix) material). Preferably, the additive is homogeneously dispersed in the matrix formed by the synthetic polymer. Such polymer additive compositions have the advantage that they will be much less damaged when they are incorporated for instance by means of extrusion into a composition that contains the host polymer. Additionally, the additive is released in a much better controlled and slow manner when compared with the balloon type of polymer additive composition. Preferably, the synthetic polymer of which the matrix is made has been crosslinked. In a particularly preferred embodiment of the present invention the solid sphere type polymer additive is enclosed by a polymeric shell which can be made of the synthetic polymer or another type of polymer. Preferably, another type of polymer is used that allows for an improved controlled and slow release of the additive. Such polymers include for instance acrylates or styrenes.

A drawback of the known multiadditives systems is that various additives can react with each other, deteriorating there long-term performance. In accordance with the present invention this problem can attractively be solved because the various additives can be kept separate from each other until one or more of them are released towards the host polymer.

Another benefit of the present invention is the encapsulation of an additive in the liquid form. The reason being that after encapsulation, the liquid additive will behave as a solid material, allowing it to be processes as a solid.

The synthetic polymers to be used in accordance with the present invention form matrices that have only small amounts of free volume, ensuring that there will be a low and controlled diffusion rate of the additive towards the host polymer.

In the polymer additive compositions according to the present invention the additive can suitably be present in an amount in the range of from 5 to 80 wt.%, based on polymer additive composition. Preferably, the additive is present in an amount in the range of from 10 to 60 wt.%, based on polymer additive composition, and more preferably in an amount in the range of from 20 to 50 wt.%.

The additive to be used in accordance with the present invention can suitably be selected from the group chosen of antioxidants, UV stabilisers, hydroperoxide decomposers, hindered amine light stabilisers, antiozonants, antitatic agents, quenchers, antifogging agents, antisqueek agents, slip additives, antimicrobial agents and/or corrosion inhibitors. Preferably, the additive comprises a polymer stabiliser which is selected from the group consisting of antioxidants, UV stabilisers, hindered amine light stabilisers, quenchers and/or hydroperoxide decomposers.

The polymer stabiliser may be selected from a group comprising phenolics, phosphites, phosphonites, thiosynergists, (hindered) amines, benzophenones, benzotriazoles, triazines, oxanilides, cinnamates quinolines, quenchers or chemical or physical blends thereof.

The particles of the polymer additive composition according to the present invention can be prepared in several ways for instance by using a suspension polymerisation process, a solvent evaporation process or a dispersion process.

In accordance with the invention it has surprisingly been found that homogeneous matrices of these synthetic polymers can be made by suspension polymerisation in the presence of large amounts (20-50 % by weight) of additives such as UV stabilisers and antioxidants. This finding is highly unexpected since such additives are expected to affect the formation of polymer matrices because of their interaction with radicals.

The present invention therefore also relates to a method for preparing a polymer additive composition according to the present invention comprising the following steps:
a) the additive is dissolved and/or mixed with one or more monomers under conditions that allow the monomer(s) to form a synthetic polymer having a glass transition temperature (T_{g} value) higher than 25°C;
b) the solution or mixture so obtained is dispersed in a liquid; and
c) the solution or mixture is subsequently kept for a sufficient period of time at an elevated temperature to allow the polymer additive composition to be formed.

Suitably, the monomer(s) used is (are) capable of forming a synthetic polymer having a glass transition temperature in the range of from 40 to 230°C.

Preferably, the monomer(s) is (are) capable of forming a synthetic polymer having a glass transition temperature in the range of from 40 to 150°C. More preferably, the monomer(s) is (are) capable of forming a synthetic polymer having a glass transition temperature in the range of from 80 to 150°C.

In accordance with the present invention one type of monomer or two or more different types of monomers can be used.

The monomer(s) is (are) preferably selected from the group of monomers able to form one or more of the following polymers: polyacrylates, polymethacrylates, polystyrenes polyesters polyamides, polyimides, polyurethanes and/or polyureas. More preferably, the monomer comprises methylacrylates and/or methylmethacrylates. In step a) the additive can suitably be present in an amount in the range of from 5 to 80 wt.%, based on the monomer. Also a (radical) initiator and/or catalyst may be present. The (radical) initiator and/or catalyst can suitably be present in an amount in the range of from 0.01 and 10 wt. %, based on the monomer.

In step b) the solution or mixture obtained is dispersed in a suitable liquid for instance oxygen-free water. This is usually done by means of stirring, with or without the addition of a suitable emulsifier. Preferably, step b) is carried out in the presence of an emulsifier which is used in an amount in the range of from 0.1 to 20 wt.%, based on total solution or mixture.

In step c) the temperature can suitably be in the range of from 40 to 100 °C, preferably in the range of from 50 to 80°C. The solution or mixture is kept at such temperature for a sufficient period of time to allow the polymer additive composition to be formed. Suitably, this period of time is in the range of from 10 minutes and 24 hours, preferably in the range of from 10 minutes to 8 hours.

The polymerised particles thus obtained may be used as a dispersion or as a dry powder after removal of the water or other dispersion liquid.

In another embodiment, the polymer additive composition according to the present invention is prepared by means of a solvent evaporation process. It has been found that large quantities of the synthetic polymer (10-30 % by weight) and of the additive (20-40% by weight) can be dissolved in a suitable solvent (e.g. methylene chloride). When this solution is dispersed in water and heated to evaporate the solvent, small spheres (10-100µm) can be manufactured. The advantage of this technique is the higher amount of polymer additive that can be incorporated in the capsules. Hence, the present invention also relates a method for preparing a polymer additive composition according to the present invention comprising the following steps:
a) the synthetic polymer and the additive are dissolved and/or mixed in a solvent;
b) the solution or mixture so obtained is dispersed in a liquid; and
c) the solution or mixture is subsequently kept for a sufficient period of time at an elevated temperature to allow the polymer additive composition to be formed.

Suitably, the polymer is a synthetic polymer having a glass transition temperature of from 40 to 230 °C. The polymer is preferably selected from the group consisting of polyacrylates, polymethacrylates, polystyrenes, polycarbonates, polyesters, polysulfones, polyamides, polyimides, polyketons, polyurethanes and/or polyureas. More preferably, the polymer comprises polymethylacrylates and/or polymethylmethacrylates.

In step a) the additive can suitably be present in an amount in the range of from between 5 and 80 wt.%, based on the synthetic polymer.

In step b) the solution or mixture obtained is dispersed in a suitable liquid for instance oxygen-free water. This is usually done by means of stirring, with or without the addition of a suitable emulsifier. Preferably, step b) is carried out in the presence of an emulsifier which is used in an amount in the range of from 0.1 to 20 wt.%, based on total solution or mixture.

In step c) the temperature can suitably be in the range of from 20 to 100 °C, preferably in the range of from 30 to 50°C. The solution or mixture is kept at such temperature for a sufficient period of time to allow the polymer additive composition to be formed. Suitably, this period of time is in the range of from 10 minutes and 24 hours, preferably in the range of from 10 minutes to 4 hours.

The polymer additive composition particles thus obtained may be used as a dispersion or as a dry powder after removal of the water or other dispersion liquid.

The emulsifier to be used in the suspension polymerisation process or solvent evaporation process in accordance with the present invention may be polyvinyl acetate, poly vinyl alcohol, a polyethylene glycol or polypropylene glycol, or any other emulsifier suitable for dispersing the solution or mixture in step b). The emulsifier is preferably be used in an amount in the range of from 0.1 to 20 % by weight, based on total solution or mixture.

Preferably, the polymer additive composition in accordance with the present invention is crosslinked for instance by means of a di-, tri- or multifunctional monomer. Crosslinking is very important for the optimisation of the release of the additive from the matrix to the host polymer and for the thermal stability of the particles during processing at high temperature. It has surprisingly been found that non-crosslinked particles could be processed up to a temperature of just 90 °C, whereas crosslinked particles kept their stability up to a temperature of no less than 250 °C.

Therefore, the present invention also relates to a method wherein the polymer additive composition obtained with any of the preparation methods according to the present invention is subsequently subjected to a crosslinking treatment.

Preferably, the polymer additive composition in accordance with the present invention comprises a solid sphere type particle enveloped by a polymeric shell. The polymeric shell can be made of the synthetic polymer or another type of polymer.

The polymer additive composition according to the present invention can advantageously to be used in polymer compositions which comprise a polylolefin polymer.

Hence, the present invention also relates to a polymer composition comprising a polymer additive composition according to the present invention and a polymer which comprises a polyolefin polymer (a host polymer). Preferably, the present polymer additive compositions are used in polymer compositions wherein the polymer comprises an ethylene and/or propylene and/or butylene containing polymer. The ethylene and/or propylene and/or butylene containing polymer is preferably selected from the group comprising polyethylene homo and copolymers, polypropylene homo and copolymers, polybutylene homo and copolymers, ethylene-propylene-(diene) polymers (EP(D) polymers) and/or mixtures thereof.

The present polymer additive compositions may also be attractively used in polymer compositions comprising an elastomer. Such elastomer may be a vulcanising rubber or a thermoplastic elastomer.

Preferably, within the polymer compositions according to the present invention there exists an increased compatability between the particles of the polymer additive composition and the host polymer, i.e. the polyolefin polymer. This can be established by modification of the outer surface of the polymer additive composition particles. This can for instance be realised by using synthetic polymers of which the chains comprise long aliphatic groups.

The present invention further relates to a product comprising a polymer composition according to the invention. Examples of such products include a wide variety of polymer products such as for instance films, foils, coatings and fibres.

Such products, especially fibres, display a significantly improved resistance against photo-oxidation when compared with polymer products containing a non-encapsulated stabiliser.

The polymer compositions in accordance with the present invention may be processed into a film, a fibre or in the form of a film forming latex by means of film casting, extrusion, injection moulding, blow moulding, fibre spinning, etc.

The present invention also relates to a method for preparing the polymer composition according to present invention, in which method the polymer additive composition is incorporated into the polyolefin composition by means of extrusion or into a rubber composition my means of a two role mill process.

### TABLES AND FIGURES

Table 1 shows characteristics of release experiments of encapsulated stabilisers.

Table 2 shows characteristics of EPDM specimens containing non-encapsulated, encapsulated and free stabiliser and crosslinker.

Table 3 shows mechanical properties of thermo- and photo-oxidised EPDM.
Figure 1 shows graphically the relative release of the stabilisers from the microcapsules of the microcapsules as described in Table 1.
Figure 2 shows graphically the torque versus time during the crosslinking of some specimens.
Figure 3 shows graphically the relative release of a specific antioxidant.
Figure 4 shows graphically the relative intensity of the 1730 cm⁻¹ FTIR peak versus thermo-oxidation time for some the samples.
Figure 5 shows graphically the relative intensity of the 1730 cm⁻¹ FTIR peak versus photo-oxidation time for the backside and frontside of some samples.
Figure 6 shows graphically the oxygen absorption of three polypropylene film samples.
Figure 7 shows graphically the oxygen absorption of the three polypropylene fibre samples.

### EXAMPLES

### Methods for preparing polymer additive compositions in the form of particles

### 1. Encapsulation of a UV stabiliser in polymethyl methacrylate by means of a suspension polymerisation reaction

360 g water and 20 g of a 5 % (by weight) solution of polyvinyl acetate (PVA 18-88) were mixed in a 500 ml baffled reaction vessel. 10.0 g of the UV stabiliser 2-hydroxy-4-methoxybenzophenone (2H4M) was dissolved in 30.0 g methyl methacrylate. Then, 0.25 g of the radical initiator 2,2'-azo-bis-isobutyrylnitrile (AIBN, 0.5 mol% based on the monomer) was added to stabiliser/methyl methacrylate solution. The monomer-stabiliser-initiator solution obtained was subsequently dispersed in the polyvinyl acetate solution by stirring the mixture at a speed of 380 rpm at 38 °C. Subsequently, nitrogen was led through the reaction mixture for 45 minutes in order to remove the oxygen that was present in the mixture. Subsequently, the temperature of the mixture was increased to 64 °C, and kept at this temperature for 16 hours. Thereafter, the temperature was increased to 80 °C for 1 hour to remove the active initiator by an accelerated reaction. The size of the latex particles thus obtained was in the range of from 500 nm to 10 µm. The particles were then predried using a rotating film evaporator and further dried by means of freeze-drying. Some of the monomer was evaporated during the removal of the oxygen and the subsequent reaction. This lead to a content of the UV stabiliser in the polymer of 35 % by weight (measured using GC) in stead of the 25 % by weight that had been calculated.

### 2. Encapsulation of a UV stabiliser in polymethylmethacrylate by means of a solvent evaporation process

A solution of 1.48 g 2H4M and 4.60 g non-stabilised polymethylmethacrylate (PMMA, Rohm and Haas) in 31.9 g methylene chloride was dispersed in 250 g water. To this solution 1 % PVA was added as emulsifier. This dispersion was then stirred at a speed of 600 rpm for 16 hours at 40 °C and under nitrogen. During this time the methylene chloride evaporated leaving solid polymer particles behind. The size of these particles so obtained ranged between 5 and 50 µm. The dispersion was concentrated at 42 °C and 650 mbar in a rotating film evaporator and dried by means of freeze-drying. The concentration UV stabiliser in the polymer was 22 % by weight (compared to the calculated 24 % by weight). Some of the particles was placed underneath a melting point microscope. The temperature was raised to 300 °C and distinct changes in the morphology could be observed. At 128 °C, the particles started to melt and coalesce. This means that the particles so obtained cannot be processed until very high temperatures, because they may melt.

### 3. Encapsulation of antioxidant in polymethylmetacrylate by means of a solvent evaporation process

A solution of 2.51 g methyl-3-(3,5,-di-t-butyl-4-hydroxyphenyl)-propionate (Ralox 35, Raschig) and 8.24 g non-stabilised PMMA in 48.9 g methylene chloride were dispersed in 353 g water. To this solution 1 % PVA was added. The dispersion was then stirred at a speed of 600 rpm for 20 hours at 42 °C under nitrogen until the methylene chloride was evaporated. The size of the particles so obtained ranged between 10 and 70 µm. The concentration Ralox 35 in the particles was 22.5 % by weight. The particles were isolated using a combination of a rotating film evaporator and freeze-drying.

### 4. Encapsulation of antioxidant in polymethylmethacrylate by means of a radical polymerisation process

A solution was made of 20 % by weight of Ralox 35 in methyl methacrylate, and a solution was made of 20 % by weight of Ralox 35 in methyl methacrylate and 10% by weight of the crosslinker ethyleneglycol dimethacrylate. 0.84 % by weight of the initiator AIBN was added to each of both solutions. The solutions were sealed in a container and place in an oven of 75 °C. After 1 hour the solution without the crosslinker had reacted and a flexible polymer was formed that could be dissolved in methylene chloride. After about 2 hours the solution containing the crosslinker had reacted and yielded a hard and brittle polymer that could not be dissolved in methylene chloride. This means that the Ralox 35 can be encapsulated using the suspension polymerisation process.

### 5. Encapsulation of UV stabiliser in crosslinked polymethyl methacrylate by means of a suspension polymerisation process

In a 500 ml baffled reaction vessel equipped with a stirrer, gas inlet, thermometer and reflux cooler, 2 g PVA were dissolved in 398 g water. 27.1 g of the monomer methyl methacrylate, 3.1 g of the crosslinker ethyleneglycol dimethacrylate (EGDMA), 10.0 g 2H4M and 490 mg AIBN were mixed together until a homogeneous solution was obtained. This solution was dispersed in the water phase using a stirring speed of 600 rpm and nitrogen was led through for 45 minutes. Subsequently, the reaction vessel was heated to 64 °C and kept at this temperature for 16 hours. Then, the temperature was raised to 82 °C for 1.5 hours and subsequently cooled to room temperature. A large part of the material (about. 50%) consisted of crosslinked particles having a particle size below about 300 nm. The other 50 % of the polymerisation product consisted of crosslinked particles of having a particle size between 10 and 50 µm. The fraction of 2H4M in the crosslinked particles was 27.6 % by weight, whereas it should have been 25 % by weight, calculated on the basis of the amounts of starting material. The difference was probably due to evaporation of the monomer. Some of the particles were placed underneath a melting point microscope. The temperature was then raised to 300 °C, but no changes in the morphology could be detected. The particles did not melt or coalesce until this high temperature, totally unlike the non-crosslinked samples. This means that the particles obtained can be processed until very high temperatures.

### 6. Encapsulation of a UV stabiliser in a crosslinked polymethyl methacrylate by means of a suspension polymerisation reaction

A similar experiment as described in Example 5 was performed but now 3.1 g of the crosslinker trimethylolpropane triacrylate (TMPTA) was used. The size of the particles obtained was slightly higher than that of the particles obtained in Example 5 (average particle size of the largest particles is about 60 µm) and the concentration of UV stabiliser in the polymer particles was 22.3 % by weight.

### 7. Encapsulation of a UV stabiliser in a crosslinked core-shell polymethyl methacrylate by means of a suspension polymerisation reaction

In a 500 ml baffled reaction vessel equipped with a stirrer, gas inlet, thermometer and reflux cooler, 2 g PVA were dissolved in 398 g water. 26.9 g of the monomer methyl methacrylate, 3.0 g of the crosslinker trimethylolpropane triacrylate (TMPTA), 10.0 g 2H4M and 451 mg AIBN were mixed together until a homogeneous solution was obtained. This solution was dispersed in the water phase using a stirring speed of 600 rpm and nitrogen is led through for 45 minutes. It was aimed to add a second monomer batch at n extent of conversion of the first batch of about 20%. Using a gravimetrical technique it was found that an extent of conversion of approximately 20% was obtained after about 30 minutes. Thus, the reaction vessel was heated to 64 °C and kept at this temperature for 30 minutes. Subsequently, a mixture of 5.6 g TMPTA and 51.4 g methyl methacrylate was added and the reaction mixture was stirred for another 16 hours. The size of the resulting particles ranges between 50 and 100 and the concentration of UV stabiliser in the polymer particles was 11.9 % by weight.

### Performance measurements of polymer additive compositions in the form of particles

### I. Release measurements of the encapsulated stabilisers

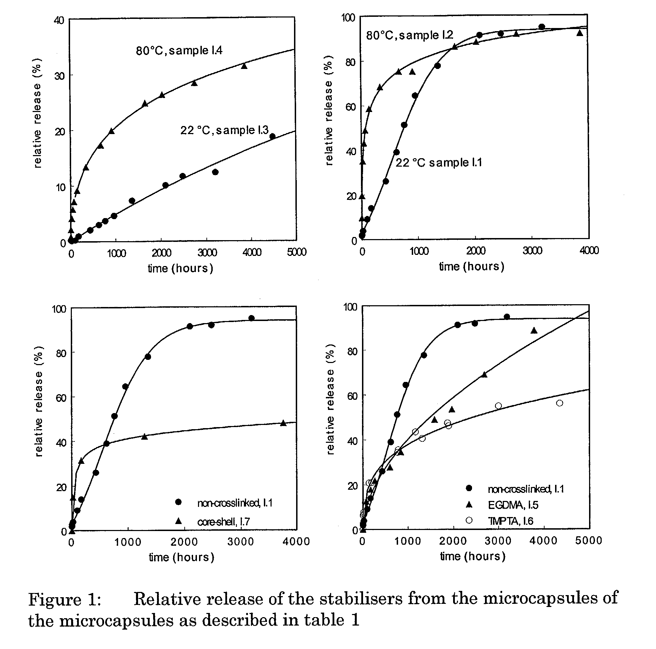

The microcapsules as prepared in Examples 1-7 were immersed in a silicon oil. This dispersion was continuously stirred and the concentration of stabiliser released from the microcapsules was measured by means of UV-spectroscopy. The solubility of both the stabilisers Ralox 35 and 2H4M is relatively good in silicon oil (3.9 and 0.6 % by weight respectively at room temperature and 9 and 0.9 % by weight at 80 °C). The PMMA matrix material was not affected by the silicon oil. The UV stabiliser 2H4M had two maxima in the UV region that can be used, viz. 288 and 326 nm. The antioxidant Ralox 35 had a maximum at 282 nm. In Table 1 the release experiments are listed. The release experiments as described in Table 1 are shown in Figure 1. The release of the UV-stabiliser was much faster than the release of the antioxidant. As to the latter, even after 5000 hours only 20 % of the antioxidant was released. At higher temperature, this release was around 35 %. The use of a crosslinker during the polymerisation process (Examples 5 and 6) resulted in an initial higher release rate. This rate decreased with time, thus slowing down the releas to the environment. The core-shell (Example 7) microcapsules showed a similar behaviour and it seemed that the release was slowed down even further after some time.

### II. Blending of the microencapsulated stabilisers in EPDM

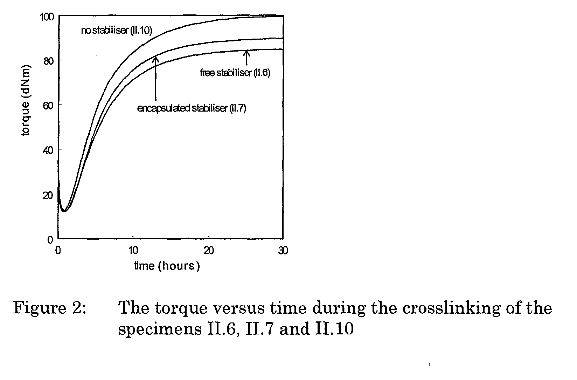

Some of the encapsulated stabilisers as decribed in the Examples 1-7 were blended with a stabiliser free EPDM (Keltan 512). Two sets of specimens were prepared: one with crosslinker (II.1-II.5) and one without crosslinker (II.6-II.10) For the crosslinker containing specimens, about 100 g of EPDM was mixed with 3.75 % of the dicumylperoxide Perkadox BC-40 MBgr (Akzo). The final concentration of peroxide in the EPDM was 1.5 % by weight. Subsequently, the appropriate amount of stabiliser was added and the mixture was mixed for 10 minutes at 50 °C using a two roll mill. The EPDM specimens are listed in Table 2. The specimens II.1 to II.5 are made into rubber sheets by compression moulding at 100 °C for 15 minutes. The specimens II.6 to II.10 were made into crosslinked rubber sheets by compression moulding at 170 °C for 15 minutes. The thickness of all sheets was 1mm. The specimens II.6, II.7 and II.10 were also crosslinked in a rheometer, in which the crosslinking reaction could be monitored by measuring the torque during curing. Plots of the torque versus time for these three experiments are shown in Figure 2. Figure 2 clearly shows that the crosslinking reaction was most effective without the addition of antioxidant (II.10): the highest torque is reached. The addition of non-encapsulated antioxidant decreased the maximum torque approximately 15 %. The encapsulated antioxidant had a much less pronounced effect on the crosslinking efficiency than the homogeneously dispersed non-encapsulated antioxidant. Due to the fact that most of the antioxidant was encapsulated in microcapsules, the availability of the antioxidants near the crosslinking peroxides was much reduced.

### III. Release of the stabilisers from the EPDM samples

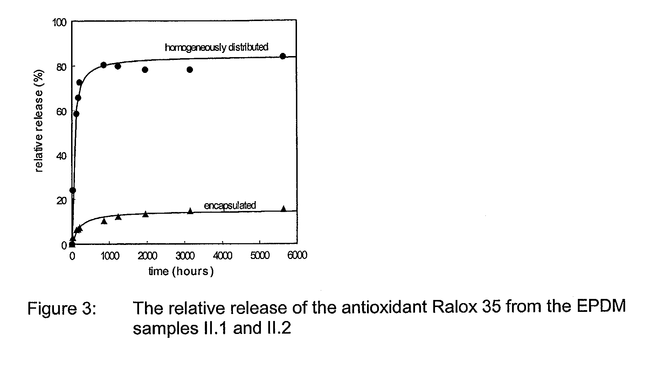

The crosslinker free specimens II.1 to II.5 were used for release experiments. A circular sample of 11 mm in diameter was made from the 1 mm thick sheet and immersed in silicon oil at 22 °C. UV spectroscopy was used to monitor the concentration development in the oil phase with time. Figure 3 shows the relative release of the stabilisers into the oil phase as a function of time.

### IV. Thermo-oxidation of stabilised EPDM

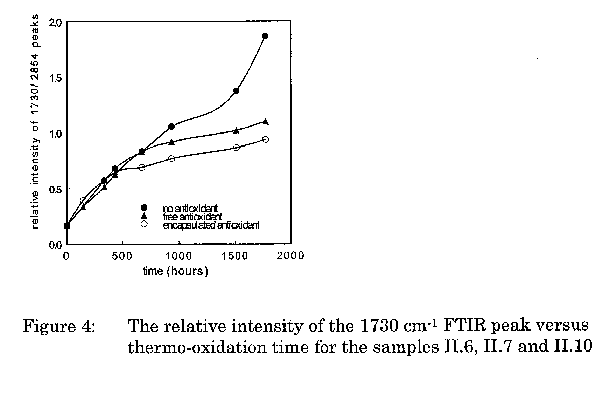

Some of the specimens as listed in Table 2 were subjected to an oven ageing test as described in NEN-ISO 188, method B. In an air circulating oven of 90 ± 1 °C, small test samples of II.6, II.7 and II.10 were suspensed freely. The thermo-oxidation during this test was followed by taking a small piece of the material at selected time intervals. Since, oxidation of polymer materials is caused by the incorporation of oxygen in the polymer chains (such as carbonyl groups), the degree of oxidation was measured by the determination of the carbonyl intensity by means if reflection FTIR. In the present case, the relative intensity of the carbonyl peak at approximately 1730 cm⁻¹ to a C2-C3 peak at approximately 2850 cm⁻¹ is plotted versus the oxidation time in Figure 4. This figure clearly shows that the non-stabilised EPDM oxidised more rapidly than the stabilised samples. Furthermore, the encapsulated stabiliser inhibited the thermo-oxidation of the EPDM better than the non-encapsulated stabiliser. It appeared that only in the beginning of the thermo-oxidation, the oxidation level of all three samples were more or less similar. The mechanical properties of the three specimens were characterised using a home-build tensile tester. The experiments were conducted at 23 °C and 50 % RH on samples of 1 mm thick, 4 mm wide and 4 cm long. The elongation speed was 10 mm/min. The values for the E-modulus, tensile strength and elongation at break are listed in Table 3. From this Table it is clear that the use of encapsulated stabilisers had a very small influence on the mechanical properties of the starting material. The E-modulus of the EPDM containing the microcapsules (II.7) was slightly higher than that of the non-stabilised material (II.10). Furthermore, the elongation at break was slightly smaller. After thermo-oxidation of the samples, a clear difference occured between the stabilised and non-stabilised material. All the mechanical properties of the non-stabilised material became worse. On the other hand, the use of encapsulated antioxidants ensured better mechanical properties after 1800 hours at 90 °C and will therefore protect the EPDM better against thermo-oxidation than the non-encapsulated antioxidants.

### V. Photo-oxidation of stabilised EPDM

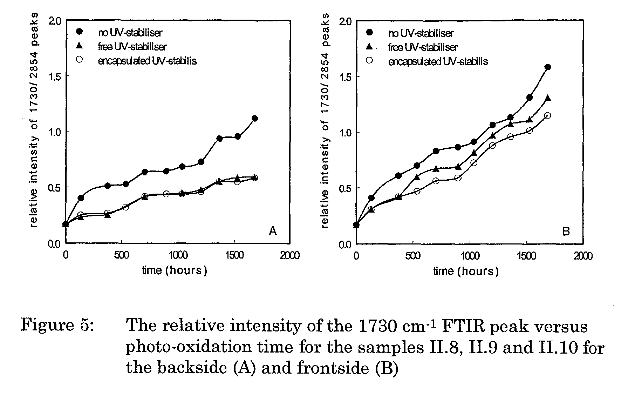

Some of the specimens in Table 2 were subjected to UV stress in a Weather-o-meter. The temperature was 65 °C (relative to black standard). The intensity of the radiation at 340 nm was 0.5 W/m². A spraying cycle of 108 minutes dry/ 12 minutes wet was used and a relative humidity 0f 50 %. The radiation source was a boro-borosilicate filtered xenon lamp. Small test pieces of samples II.8, II.9 and II.10 were radiated by UV light for a certain period of time. Samples were taken at selected time intervals and the relative intensity of the carbonyl peak was measured as described in Example IV. It was found that the rate of photo-oxidation of the EPDM depended on the side that was facing the lamp. For this reason, both sides were examined by the FTIR method. The results of the relative intensity of the carbonyl peak versus the oxidation time are shown in Figure 5. In Figure 5 it can be seen that the photo-oxidation of the non-stabilised sample was faster than the stabilised samples. The backside of the samples (Figure 5a) oxidised slower than the front side of the samples (Figure 5b). The free and encapsulated stabilisers gave the same oxidation rate of the backside of the sample. However, a significant difference was found regarding the oxidation rate at the front side of the samples. The encapsulated UV stabiliser had a better performance than the free-stabiliser. This was probably caused by the fact that the front side of the samples had a higher temperature and the presence of water at this side may have causes accelerated leaching of the non-encapsulated stabiliser. The mechanical properties of the three specimens were characterised using a home-build tensile tester. The experiments were conducted at 23 °C and 50 % RH on samples of 1 mm thick, 4 mm wide and 4 cm long. The elongation speed was 10 mm/min. The values for the E-modulus, tensile strength and elongation at break are listed in Table 3. This Table clearly shows that the use of encapsulated stabilisers had a very small influence on the mechanical properties of the starting material. The E-modulus of the EPDM containing the microcapsules (II.9) as slightly higher than that of the non-stabilised material (II.10). Furthermore, the elongation at break was slightly smaller. After photo-oxidation of the samples, a small difference occured between the stabilised and non-stabilised material. All the mechanical properties of all three materials became worse. However, the encapsulated UV-stabiliser (II.9) will protect the material for a longer time as can be concluded from the higher E-modulus and tensile strength. The elongation at break had reduced slightly, but was comparable for the two stabilised samples (II.8 and II.9). The use of encapsulated UV-stabiliser ensured better mechanical properties after 1600 hours of photo-oxidation and will therefore protect the EPDM better against photo-oxidation than the non-encapsulated stabiliser.

### VI. Microcapsules in polypropylene films

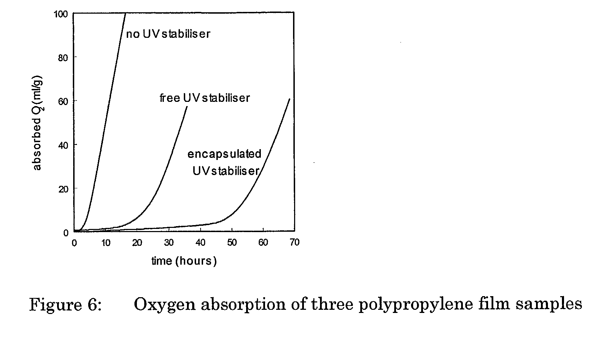

Polypropylene films were made by mixing additive-free polypropylene powder (Borealis) with the appropriate amount of non treated UV stabiliser or encapsulated UV stabiliser (Example 6) in order to obtain a weight fraction of UV stabiliser in the polymer of 0.3 %. This mixture was compression moulded. The powder was heated at 230 °C for three minutes and compressed for two minutes. The films thus obtained were photo-oxidised using a high-pressure mercury lamp (TQ-150 Quartzlampen GmBH Hanau), which was placed in a cooling tube. No light below 300 nm was transmitted through the cooling tube glass. Small samples (6.0 x 2.0 cm, approx.150 µm thick, approx. 170 mg in weight) were mounted against the cooling tube and this tube was inserted in the reaction vessel. The oxygen pressure in this vessel was kept at 1.15 ± 0.05 atm and the temperature was kept at 80 ± 1 °C. During photo-oxidation oxygen in the reaction vessel was consumed and the oxygen pressure was kept constant, while the amount of oxygen consumed was measured. A molecular sieve was placed in the reaction vessel to absorb any volatile reaction products. In Figure 6, the oxygen consumption versus time is plotted during the photo-oxidation of a non-stabilised sample, a sample containing free stabiliser and a sample containing encapsulated stabiliser. From Figure 6, it is clear that the encapsulated UV stabiliser was more effective than the non-encapsulated stabiliser. Two phenomena accounted for this difference: First, the loss of stabiliser during the compression moulding process due to evaporation, and second, the loss of stabiliser during the photo-oxidation process.

### VII. Microcapsules in polypropylene fibres.

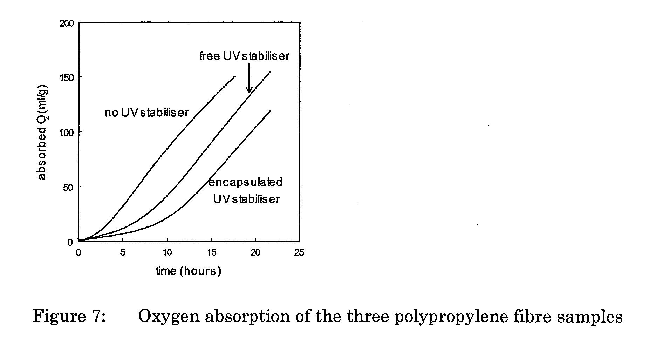

Polypropylene fibres were made by mixing the appropriate amount of UV stabiliser with additive-free polypropylene powder (Borealis). These polymer mixtures were heated to 230°C and were drawn into fibres having diameters between 50 and 100 µm. Three different samples were made: 1) no stabiliser; 2) homogeneously mixed UV stabiliser (0.5 % by weight 2H4M); 3) encapsulated UV stabiliser (0.35 % by weight 2H4M, example 6). These concentrations were verified by extracting the UV stabiliser from the polymer using methylene chloride and measuring the concentration by means of UV spectroscopy. The fibres were photo-oxidised using the oxygen absorption test as described in Example VI. In Figure 7, the oxygen consumption versus time is plotted during the photo-oxidation of the three samples. It is clearly visible that, despite the fact that the concentration of UV stabiliser was lower in the sample containing the encapsulated additive, the stability against photo-oxidation was higher.

### VIII. Blending the microcapsules with coating compositions.

Dispersions of the microcapsules as obtained in Examples 3, 5 and 6 before the drying step were mixed with a commercial acrylic latex (Neocryl XK 90, Neoresins). These waterborne mixtures were cast on a glass plate and transparent films were obtained. Release experiments showed that the release of both the UV absorber as well as the antioxidant was reduced by the encapsulation of the additive.

**Table 1:**

| Release experiments of encapsulated stabilisers | | | | | | | |
|---|---|---|---|---|---|---|---|
| **Specimen** | **Example** | **Stabiliser** | **Weight fraction** | **Average particle size** | **Weight fraction in oil** | **Max concentration** | **Temperature** |
| **I.1** | **2** | **2H4M** | **22.0 %** | **20-40 µm** | **0.026 %** | **57.3 ppm** | **22 °C** |
| **I.2** | **2** | **2H4M** | **22.0 %** | **20-40 µm** | **0.026 %** | **57.0 ppm** | **80 °C** |
| **1.3** | **3** | **Ralox 35** | **22.5 %** | **30-50 µm** | **0.117 %** | **263 ppm** | **22 °C** |
| **1.4** | **3** | **Ralox 35** | **22.5 %** | **30-50 µm** | **0.126 %** | **283 ppm** | **80 °C** |
| **1.5** | **5** | **2H4M** | **27.6 %** | **40-60 µm** | **0.031 %** | **85 ppm** | **22 °C** |
| **I.6** | **6** | **2H4M** | **22.3 %** | **50-70 µm** | **0.032 %** | **71 ppm** | **22 °C** |
| **I.7** | **7** | **2H4M** | **11.9 %** | **50-100 µm** | **0.054%** | **64 ppm** | **22 °C** |

**Table 2:**

| EPDM specimens containing no, encapsulated and free stabiliser and crosslinker | | | | | |
|---|---|---|---|---|---|
| **Specimen** | **Example** | **Stabiliser** | **Encapsulated** | **Total fraction** | **Dicumyl peroxide** |
| **II.1** | **-** | **Ralox 35** | **-** | **0.2 % by weight** | **-** |
| **II.2** | **3** | **Ralox 35** | **0.9 %** | **0.2 %** | **-** |
| **II.3** | **-** | **2H4M** | **-** | **0.2 %** | **-** |
| **II.4** | **2** | **2H4M** | **0.9 %** | **0.2 %** | **-** |
| **II.5** | **-** | **-** | **-** | | **-** |
| **II.6** | **-** | **Ralox 35** | **-** | **0.5 %** | **1.5 %** |
| **II.7** | **3** | **Ralox 35** | **2.25 %** | **0.5 %** | **1.5 %** |
| **II.8** | **-** | **2H4M** | **-** | **0.2 %** | **1.5 %** |
| **II.9** | **2** | **2H4M** | **0.91 %** | **0.2 %** | **1.5 %** |
| **II.10** | **-** | **-** | | **-** | **1.5 %** |

**Table 3:**

| Mechanical properties of thermo- and photo-oxidised EPDM | | | | | | | | |
|---|---|---|---|---|---|---|---|---|
| **Sample** | | | | | | | | |
| | **E-modulus (MPa)** | **tensile strength (MPa)** | **elongation at break (%)** | **time in weather- o-meter** | **time in oven** | **E-modulus (MPa)** | **tensile strength (MPa)** | **elongation at break (%)** |
| **II.6** | **1.8 ± 0.1** | **1.09 ± 0.23** | **480 ± 150** | | **1800 h** | **2.0 ± 0.12** | **0.84 ± 0.06** | **181 ± 18** |
| **II.7** | **2.1 ± 0.3** | **1.07 ± 0.11** | **290 ± 80** | | **1800 h** | **2.8 ± 0.16** | **1.16 ± 0.08** | **230 ± 21** |
| **II.10** | **1.8 ± 0.1** | **1.08 ± 0.19** | **290 ± 90** | | **1800 h** | **0.42 ± 0.09** | **0.25 ± 0.03** | **96 ± 9** |
| **II.8** | **1.9 ± 0.1** | **1.21 ± 0.08** | **234 ± 17** | **1600 h** | | **0.58 ± 0.02** | **0.32 ± 0.02** | **66 ± 4** |
| **11.9** | **1.8 ± 0.1** | **1.11 ± 0.08** | **201 ± 21** | **1600 h** | | **0.84 ± 0.11** | **0.39 ± 0.02** | **67 ± 5** |
| **II.10** | **1.8 ± 0.1** | **1.08 ± 0.19** | **290 ± 90** | **1600 h** | | **0.49 ± 0.04** | **0.27 ± 0.02** | **93 ± 2** |

## Claims

1. A polymer additive composition in the form of particles comprising an additive for protecting a host polymer against degradation which additive is encapsulated in a release controlling matrix which matrix is formed of a synthetic polymer having a glass transition temperature (T_{g} value) higher than 25°C.

2. A composition according to claim 1, wherein the synthetic polymer has a glass transition temperature in the range of from 40 to 230°C.

3. A composition according to claim 1 or 2, wherein the synthetic polymer is selected from the group consisting of acrylate polymers, methacrylate polymers, styrenic polymers, polycarbonates, polyesters, polysulfones, polyamides, polyimides, polyketons polyurethanes, and/or polyureas.

4. A composition according to claim 1, wherein the synthetic polymer has a glass transition temperature in the range of from 80 to 150°C.

5. A composition according to claim 3 or 4, wherein the synthetic polymer comprises poly-methyl methacrylate (PMMA) and/or poly-methyl acrylate (PMA).

6. A composition according to any one of claims 1-5, wherein the additive is present in an amount of from 5 to 80 wt.%, based on polymer additive composition.

7. A composition according to any one of claims 1-6, wherein the additive comprises a polymer stabiliser which is selected from the group consisting of antioxidants, UV stabilisers, hindered amine light stabilisers, quenchers and/or hydroperoxide decomposers.

8. A composition according to any one of claims 1-7, wherein the composition has been crosslinked.

9. A composition according to any one of claims 1-8, wherein the composition is enveloped by a polymeric shell.

10. A method for preparing a polymer additive composition according to any one of claims 1-7, comprising the following steps:
a) the additive is dissolved and/or mixed with one or more monomers under conditions that allow the monomer(s) to form a synthetic polymer having a glass transition temperature (Tg value) higher than 25°C;
b) the solution or mixture so obtained is dispersed in a liquid; and
c) the solution or mixture is subsequently kept for a sufficient period of time at an elevated temperature to allow the polymer additive composition to be formed.

11. A method according to claim 10, wherein the monomer(s) is (are) capable of forming a synthetic polymer having a glass transition temperature in the range of from 40 to 230°C.

12. A method according to claim 10 or 11, wherein the monomer(s) is (are) selected from the group of monomers able to form one or more of the following polymers: polyacrylates, polymethacrylates, polystyrenes, polycarbonates, polyesters, polyamides, polyimides, polyurethanes and/or polyureas.

13. A method according to any one of claims 10-12 wherein the monomer is capable of forming a synthetic polymer having a glass transition temperature in the range of from 80 to 150°C.

14. A method according to claim 12 or 13, wherein the monomer comprises methylacrylates and/or methylmethacrylates.

15. A method for preparing a polymer additive composition according to any one of claims 1-7, comprising the following steps:
a) the synthetic polymer and the additive are dissolved and/or mixed in a solvent;
b) the solution or mixture so obtained is dispersed in a liquid; and
c) the solution or mixture is subsequently kept for a sufficient period of time at an elevated temperature to allow the polymer additive composition to be formed.

16. A method according to claim 15, wherein the synthetic polymer is selected from the group consisting of acrylate polymers, methacrylate polymers, styrenic polymers, polycarbonates, polyesters, polysulphons, polyamides, polyimides, polyketons, polyurethanes, and/or polyureas.

17. A method according to claim 15, wherein the synthetic polymer comprises poly-methyl methacrylate (PMMA) and/or poly-methyl acrylate (PMA).

18. A method according to any one of claims 10-17, wherein the additive is present in an amount in the range of from between 5 and 80 wt.%, based on the monomer or the synthetic polymer.

19. A method according to any one of claims 10-18, wherein step b) is carried out in the presence of an emulsifier which is used in an amount in the range of from 0.1 to 20 wt.%, based on total solution or mixture.

20. A method according to any one of claims 10-19, wherein the polymer additive composition so obtained is subjected to a crosslinking treatment.

21. A method according to any one of claims 10-20, wherein the polymer additive composition so obtained is enveloped by a polymeric shell.

22. A polymer composition comprising a polymer additive composition according to any one of claims 1-9 and a polymer which comprises a polylolefin polymer or an elastomer.

23. A polymer compositions according to claim 22, wherein the polymer comprises a polyolefin polymer.

24. A polymer composition according to claim 23, wherein the polymer comprises an ethylene, propylene and/or butylene containing polymer.

25. A polymer composition according to claim 24, wherein the ethylene, propylene and/or butylene containing polymer is selected from the group comprising polyethylene homo and copolymers, polypropylene homo and copolymers, polybutylene homo and copolymers, ethylene-propylene-(diene) polymers (EP(D) polymers) and/or mixtures thereof.

26. A product comprising the polymer composition according to any one of claims 22-25.

27. A method for preparing a polymer composition according to 22, wherein the polymer additive composition is incorporated into the polyolefin composition by means of extrusion or into the elastomer by means of a two role mill process.
